# EUROPÄISCHE PATENTANMELDUNG

(11) **EP 4 491 376 A1**
(43) Veröffentlichungstag der Anmeldung: **15.01.2025**
(21) Anmeldenummer: 23185307.8
(22) Anmeldetag: 13.07.2023
(51) Int. Cl.: B29C 64/118, B29C 64/386, B29C 64/393, B33Y 10/00, B22F 10/18, B22F 10/25, B22F 10/36, B22F 10/38, B22F 10/85, B23K 26/342, B23K 9/04, B33Y 50/02

(54) **VERFAHREN UND VORRICHTUNG ZUR ADDITIVEN FERTIGUNG**

(71) Anmelder: Siemens Aktiengesellschaft, 80333 München (DE)
(72) Erfinder: Breuer, Marius, 81925 München (DE)
(74) Vertreter: Siemens Patent Attorneys

(57) **Zusammenfassung**

Es wird ein Verfahren zur additiven Fertigung eines Formkörpers (1) durch Aufbringung von Material in einer Mehrzahl aufeinanderfolgender Schichten (S) angegeben, wobei in der jeweiligen Schicht (S) wenigstens ein Teilelement (10) durch die Aufbringung einer zusammenhängenden Materialraupe (MR) aus fließfähigem Material gebildet wird, mit den folgenden Schritten:
a) Bereitstellung einer Zielgeometrie (ZG),
b) Bestimmung wenigstens eines Prozessparametersatzes zur Fertigung des Formkörpers (1), wobei eine Abfolge von Schichten (S) festgelegt wird und für jede Schicht (S) wenigstens eine Bahnbewegung eines Druckwerkzeugs (20) festgelegt wird, wobei die Abfolge der Bahnbewegungen in ihrer Gesamtheit geeignet ist, um bei Anwendung auf das Druckwerkzeug (20) den Formkörper (1) additiv herzustellen und dabei die Zielgeometrie (ZG) nachzubilden,
c) Vorhersage von wenigstens einer Prozessgeometrie (PG1, PG2) für den Formkörper (1) durch rechnergestützte Simulation, wobei bei der Simulation der Aufbringung der jeweiligen Schicht (Sᵢ) die vorhergesagte Geometrie der jeweils vorausgehenden Schicht (Sᵢ₋₁) als Ausgangsbasis verwendet wird,
d) Auswahl eines Prozessparametersatzes auf Basis der Simulation, welcher eine Variation von wenigstens einem Prozessparameter bei der Aufbringung von wenigstens einer zusammenhängenden Materialraupe (MR) beinhaltet, wobei diese Variation bewirkt, dass die Einhaltung einer Zielhöhe (ZH) des gebildeten Teilelements (10) im Verlauf der Materialraupe (MR) verbessert wird,
e) Fertigung des Formkörpers (1) unter Verwendung des in Schritt d) ausgewählten Prozessparametersatzes.

## Beschreibung

Die vorliegende Erfindung betrifft ein Verfahren zur additiven Fertigung eines Formkörpers durch Aufbringung von Material in einer Mehrzahl aufeinanderfolgender Schichten, wobei in der jeweiligen Schicht wenigstens ein Teilelement durch die Aufbringung einer zusammenhängenden Materialraupe aus fließfähigem Material gebildet wird. Weiterhin betrifft die Erfindung eine Vorrichtung zur Durchführung eines solchen Verfahrens.

Aus dem Stand der Technik sind mehrere Verfahren zur additiven Fertigung von dreidimensionalen Formkörpern bekannt, bei denen Materialraupen aus fließfähigem Material aufgebracht und anschließend verfestigt werden. So kann die Materialraupe beispielsweise aus geschmolzenem Material gebildet werden, welche durch eine Extrusionsdüse extrudiert wird und nach der Aufbringung auf die jeweilige Unterlage erstarrt. Wenn solche Extrusionsraupen in aufeinanderfolgenden Schichten aufgebracht werden, können vergleichsweise komplexe dreidimensionale Körper gebildet werden. Alternativ zu solchen Materialextrusions-Verfahren können auch andere Verfahrens-Klassen zum Einsatz kommen, beispielsweise Verfahren, die auf Materialauftrag mit gerichteter Energieeinbringung basieren. Hierzu gehört das sogenannte Lichtbogendrahtauftrags-Schweißen, das in der Fachwelt auch als WAAM-Verfahren bezeichnet wird (WAAM für englisch: "Wire (and) Arc Additive Manufacturing". Hier werden aus einem drahtförmigen Ausgangsmaterial flüssige Schweißraupen gebildet, welche wiederum in einer Abfolge von Schichten den dreidimensionalen Formkörper ausbilden.

Allgemein werden solche additiven Fertigungsverfahren umgangssprachlich auch als 3D-Druck-Verfahren bezeichnet, wobei die Erfindung speziell ein Verfahren betrifft, bei dem eine Abscheidung einer Materialraupe aus einem fließfähigen Material zum Einsatz kommt. Nach der Abscheidung erstarrt die Materialraupe, um so jeweils ein festes Teilelement des zu fertigenden Formkörpers auszubilden.

Eine Schwierigkeit bei solchen additiven Fertigungsverfahren besteht generell darin, auch überhängende Strukturen und freitragende Strukturen (sogenannte Materialbrücken) neben bzw. über Hohlräumen des Formkörpers auszubilden. Je nach Verfahrenstyp können verschiedene Überhangwinkel bzw. Brückenlängen realisiert werden. Zum Teil werden auch temporäre Stützstrukturen benötigt, wenn freitragende Strukturen mit dem jeweiligen Verfahren nicht aufgebaut werden können. Allgemein ist es mit den auf flüssigen Materialraupen basierenden Verfahren eine Herausforderung, vor allem im Bereich von überhängenden bzw. freitragenden Strukturen, den Formkörper getreu der vorgegebenen Zielgeometrie herzustellen. Im Bereich von überhängenden Materialflanken liegt dies daran, dass die aufgetragenen fließfähigen Materialraupen vor ihrem Erstarren auf der jeweiligen Unterlage absacken können, was typischerweise zu einer verminderten Höhe der neu ausgebildeten Schicht führt. Im Bereich von Materialbrücken fehlt die Unterlage unter der aufgetragenen fließfähigen Materialraupe sogar vollständig, was zu einem Abriss des fließfähigen Materials und somit zu einer ungewollten Lücke in der Geometrie des entstehenden Formkörpers führen kann. Insgesamt kommt es zu unerwünschten Abweichungen zwischen der mit dem Herstellungsverfahren gebildeten Geometrie des Formkörpers und der Zielgeometrie.

Aufgabe der Erfindung ist es, ein Verfahren zur additiven Fertigung anzugeben, welches die genannten Nachteile überwindet. Insbesondere sollen Möglichkeiten angegeben werden, um bei der additiven Fertigung mit fließfähigem Material eine vordefinierte Zielgeometrie mit einem sequentiellen Schichtauftrag möglichst genau nachzubilden. Eine weitere Aufgabe ist es, eine entsprechende Fertigungs-Vorrichtung anzugeben.

Diese Aufgaben werden durch das in Anspruch 1 beschriebene Verfahren und die in Anspruch 15 beschriebene Vorrichtung gelöst. Das erfindungsgemäße Verfahren dient zur additiven Fertigung eines Formkörpers durch Aufbringung von Material in einer Mehrzahl aufeinanderfolgender Schichten, wobei in der jeweiligen Schicht wenigstens ein Teilelement durch die Aufbringung einer zusammenhängenden Materialraupe aus fließfähigem Material gebildet wird.

Das Verfahren weist die folgenden Schritte auf:
a) Bereitstellung einer Zielgeometrie für den Formkörper,
b) Bestimmung wenigstens eines Prozessparametersatzes zur Fertigung des Formkörpers, wobei eine Abfolge von Schichten festgelegt wird und für jede Schicht wenigstens eine Bahnbewegung eines Druckwerkzeugs zur Aufbringung des Materials festgelegt wird, wobei die Abfolge der Bahnbewegungen in ihrer Gesamtheit geeignet ist, um bei Anwendung auf das Druckwerkzeug den Formkörper additiv herzustellen und dabei die Zielgeometrie zumindest näherungsweise nachzubilden,
c) Vorhersage von wenigstens einer Prozessgeometrie für den Formkörper durch rechnergestützte Simulation in Abhängigkeit des wenigstens einen Prozessparametersatzes, wobei bei der Simulation der Aufbringung der jeweiligen Schicht die vorhergesagte Geometrie der jeweils vorhandenen vorausgehenden Schicht als Ausgangsbasis verwendet wird,
d) Auswahl eines Prozessparametersatzes auf Basis der Simulation, welcher eine Variation von wenigstens einem Prozessparameter bei der Aufbringung von wenigstens einer zusammenhängenden Materialraupe beinhaltet, wobei diese Variation bewirkt, dass die Einhaltung einer Zielhöhe des gebildeten Teilelements im Verlauf der Materialraupe verbessert wird,
e) Fertigung des Formkörpers unter Verwendung des in Schritt d) ausgewählten Prozessparametersatzes.

Bei dem Verfahren wird also der Formkörper schichtweise additiv aufgebaut. In jeder der gebildeten Schichten werden ein oder mehrere Teilelemente durch Aufbringung einer Materialraupe gebildet. Der Begriff "Materialraupe" soll allgemein ein aufgetragenes Material mit einer insgesamt länglichen Form bezeichnen, so wie dies beispielsweise bei einer sogenannten Extrusionsraupe, Schweißraupe bzw. Kleberaupe der Fall ist. Dabei muss eine solche Materialraupe nicht gerade sein, sondern kann beispielsweise gebogene und/oder gerade Abschnitte aufweisen, so dass insbesondere auch ein gewundener länglicher Körper entstehen kann. Innerhalb einer Schicht können auch mehrere aus derartigen Materialraupen gebildeten Teilelemente aufgebracht werden. So können beispielsweise ein oder mehrere Umfangselemente gebildet werden, welche optional durch ein oder mehrere Füllelemente gefüllt sind. Dabei kann die gebildete Füllung entweder weitgehend massiv sein oder auch gitterartig sein und entsprechend Hohlräume enthalten.

Allgemein und unabhängig vom speziellen Auftragungsverfahren ist das Material der Materialraupe während der Aufbringung fließfähig und somit auch formbar. Zweckmäßig geht es im Anschluss an die Aufbringung und insbesondere vor der Aufbringung der nächsten Schicht in einen festen Zustand über, so dass insgesamt ein fester dreidimensionaler Körper gebildet wird. Der Übergang in den festen Zustand kann beispielsweise durch Erstarren einer Schmelze (z.B. eines geschmolzenen Kunststoffs oder Metalls) oder auch durch Aushärten eines Klebers oder einer anderen Art von Paste bzw. durch Trocknen einer Emulsion oder Dispersion erfolgen.

In Schritt a) wird eine Zielgeometrie für den Körper festgelegt. So kann beispielsweise ein Nutzer des Verfahrens eine gewünschte Idealgeometrie für den herzustellenden Körper in Form von CAD-Daten(CAD für englisch "computer-aided design") oder anderen üblichen Datenformaten für dreidimensionale Geometrien angeben. Solche CAD-Daten können beispielsweise im STL-Format vorliegen. Ausgehend von dieser idealen Zielgeometrie wird in Schritt b) wenigstens ein Fertigungsprozess anhand eines zugehörigen Prozessparametersatzes bestimmt. Für diesen Fertigungsprozess wird die Struktur des zu bildenden Formkörpers in eine Mehrzahl von aufzubringenden Teilelementen in einer Mehrzahl von aufeinanderfolgenden Schichten zerlegt, so dass die betreffenden Teilelemente mit dem vorab beschriebenen additiven Fertigungsverfahren hergestellt werden können. Es kann also jede Schicht wiederum ein oder mehrere Teilelemente aufweisen. Die aus solchen Schichten und Teilelementen zusammengesetzte Prozessgeometrie (also die Struktur, die mit dem Prozess herstellbar ist) bildet typischerweise die Zielgeometrie nur näherungsweise ab, da beispielsweise die Aufteilung in Schichten zu einer stufenförmigen Kontur des gebildeten Körpers führt. Auch die Zusammensetzung der Schichten durch ein oder mehrere raupenförmig ausgebildete Teilelemente ist in dieser Prozessgeometrie erkennbar.

Die Zerlegung der Zielgeometrie und die Bestimmung eines solchen Fertigungsprozesses anhand der Zielgeometrie und anhand von bekannten Rahmenbedingungen für das angewendete Fertigungsverfahren sind im Stand der Technik hinreichend bekannt und sie können insbesondere computergestützt erfolgen. Die hierzu typischerweise eingesetzten Programme werden als Slicer-Software oder auch als Slicing-Software oder Slicer bezeichnet. Ein solcher Slicer rechnet die Zielgeometrie zunächst in einen Stapel von Schichten um und teilt jede dieser Schichten in ein oder mehrere Teilelemente auf, die mit länglichen Materialraupen gebildet werden können. Für die einzelnen Teilelemente ergibt sich jeweils eine Zielhöhe, also mit anderen Worten eine ideale Ausdehnung in Richtung der jeweiligen Schichtdicke. Diese Zielhöhe ist typischerweise innerhalb eines Teilelements konstant und kann insbesondere der Dicke der zugehörigen Schicht entsprechen. Die Zielhöhe kann aber auch für verschiedene Teilelemente innerhalb einer Schicht unterschiedlich sein, z.B. wenn einzelne Teilelemente die Dicke der zugehörigen Schicht nicht vollständig ausschöpfen. Prinzipiell kann die Zielhöhe aber auch innerhalb des jeweiligen Teilelements variieren, wobei sich dann abhängig von der Position entlang des Teilelements jeweils eine lokale Zielhöhe ergibt.

Für jede dieser Schichten und Teilelemente wird dann eine Abfolge von Bewegungen eines Werkzeugs zur Aufbringung der Materialraupe bestimmt, die nötig ist, um die Teilelemente der jeweiligen Schicht herzustellen. Das Werkzeug zur Aufbringung der Materialraupe wird im Folgenden auch allgemein als Druckwerkzeug bezeichnet, unabhängig davon, um welche Art von Werkzeug es sich genau handelt (also beispielsweise um ein Extrusionswerkzeug oder ein Schweißwerkzeug oder eine andere Art von Werkzeug). Dieses Druckwerkzeug wird bei der Aufbringung von Material relativ zum herzustellenden Formkörper bewegt. Ein solches Druckwerkzeug wird häufig auch als Drucckopf bezeichnet.

Insgesamt wird innerhalb von Schritt b) also eine sogenannte Bahnplanung für das Druckwerkzeug erstellt. Diese Bahnplanung kann beispielsweise im sogenannten "G-Code"-Format bereitgestellt werden. Der G-Code ist eine Programmiersprache für numerische Steuerungen, die dem Druckwerkzeug Anweisungen zum Verfahren der Achsen, zur Aufbringung von Material und zu anderen Prozessparametern gibt. Wenn in Schritt b) mehrere solche Prozessparametersätze bestimmt werden, dann können zum Beispiel gleiche oder ähnliche Bewegungen des Druckwerkzeugs definiert werden, und es können ein oder mehrere Prozessparameter zwischen den einzelnen Fertigungsprozessen variiert werden. So können beispielsweise unterschiedliche Geschwindigkeiten für den Materialauftrag (z.B. Extrusionsgeschwindigkeiten) zugrundegelegt werden, oder die Relativgeschwindigkeiten zwischen Druckwerkzeug und herzustellendem Formkörper (mit anderen Worten der Vorschub) können bei den verschiedenen Prozessvarianten unterschiedlich eingestellt sein.

In Schritt c) wird eine Simulation für den in Schritt b) festgelegten wenigstens einen Prozessparametersatz durchgeführt, wobei wenigstens eine vorhergesagte Prozessgeometrie in Abhängigkeit von dem zugehörigen Prozessparametersatz simuliert wird. Es können auch mehrere solche Prozessgeometrien simuliert werden, wobei dann jeweils verschiedene Prozessparametersätze zugrunde gelegt werden. Die vorhergesagte Prozessgeometrie ist also diejenige Geometrie, die gemäß der Simulation mit dem in b) bestimmten Fertigungsprozess für den herzustellenden Formkörper erhalten wird.

Der genannte Prozessparametersatz umfasst insbesondere die in Schritt b) bestimmten Parameter für die Bahnbewegung des Druckwerkzeugs (also beispielsweise die Bahn in kartesischen Koordinaten und/oder Winkelkoordinaten oder auch die Koordinaten von Achsbewegungen, die zur Umsetzung einer solchen Bahn eingesetzt werden). Der Parametersatz kann neben den Koordinaten der mit dem Druckwerkzeug abzufahrenden Bahn auch die jeweilige Vorschubgeschwindigkeit umfassen. Daneben können weitere Parameter im Zusammenhang mit dem Materialauftrag umfasst sein, beispielsweise eine Extrusionsgeschwindigkeit bzw. ein Materialfluss, eine Temperatur, ein Strom und/oder eine Spannung zur Erzeugung eines Lichtbogens, eine Temperatur, eine chemische Zusammensetzung des Materials und/oder eine Intensität, eine Strahlbreite, eine Pulsfrequenz bzw. eine Pulsbreite eines verwendeten Lasers.

Wesentlich im Zusammenhang mit der vorliegenden Erfindung ist, dass bei der Simulation für die Aufbringung der jeweiligen Schicht die simulierte Geometrie der vorausgehenden Schicht als Ausgangsbasis verwendet wird, soweit eine solche vorausgehende Schicht vorhanden ist. Dies bedeutet, dass für die zweite Schicht und jede nachfolgende Schicht die im jeweiligen Bereich zuvor abgeschiedene Schicht, so wie sie mit der zugehörigen Simulation berechnet wurde, als Unterlage für die aktuelle Schicht im zugehörigen aktuellen Simulationsschritt zugrunde gelegt wird. Für die allererste Schicht steht dagegen noch keine vorhergehende abgeschiedene Schicht zur Verfügung. Hier wird stattdessen eine Bodenplatte, auf dem diese erste Schicht aufgebaut wird, in der Simulation als Unterlage für diese erste Schicht zugrunde gelegt.

Eine allgemeine Folge dieser Vorgehensweise ist, dass das Höhenprofil der vorausgehenden Schicht in der simulierten Prozessgeometrie einen Einfluss auf das Höhenprofil der darauf abgeschiedenen Schicht hat. Wenn zum Beispiel in der vorausgehenden Schicht für ein bestimmtes Teilelement eine zugehörige Zielhöhe nicht erreicht wurde, dann kann dies dazu führen, dass auch in der darauf abgeschiedenen Schicht die Zielhöhe unterschritten wird, wenn keine Maßnahmen ergriffen werden, um diesen Effekt auszugleichen. Umgekehrt kann eine zu große Höhe in der darunterliegenden Schicht zu einer Überschreitung der Zielhöhe in der aktuell abgeschiedenen Schicht führen. Außerdem spielt auch die Struktur der vorausgehenden Schicht in lateraler Richtung (parallel zur Schichtebene) eine Rolle: Wenn nämlich durch das additive Fertigungsverfahren überhängende Flanken ausgebildet werden sollen, dann kommt zumindest ein Teil der neu abzuscheidenden Materialraupen nicht auf den lateralen Positionen der darunterliegenden Schicht zum Liegen, wo die volle Schichtdicke erreicht wird. Vielmehr liegen die neu gebildeten Materialraupen teilweise hängend auf den darunterliegenden Teilelementen auf. Dies hat typischerweise zur Folge, dass in den Bereichen solcher überhängender Strukturen die Zielhöhe der aktuell hergestellten Schicht nicht erreicht wird. Wenn unterhalb der aufzubringenden Materialraupe ein Hohlraum vorliegt, dann kann es sogar zu einem Abriss der neu ausgebildeten Materialraupe kommen, und das zu bildende neue Teilelement kann unerwünschterweise lokal unterbrochen sein. Alle diese Effekte können mit der Simulation vorhergesagt werden, wenn die jeweils vorausgehende Schicht (oder gegebenenfalls die Bodenplatte) als Unterlage für die Simulation der Aufbringung der neuen Schicht verwendet wird. Die simulierte Prozessgeometrie kann dann die in der Praxis beobachteten Defekte und geometrischen Abweichungen wiedergeben.

Bei bekannten Slicing-Verfahren wird dagegen eine Simulation der gebildeten Prozessgeometrie häufig dadurch stark vereinfacht, dass die Oberkante der neu ausgebildeten Materialraupe dort platziert wird, wo das Druckwerkzeug diese "absetzt". Mit dieser Vereinfachung können die beschriebenen Effekte und ihr Einfluss auf die hergestellte Struktur jedoch nicht modelliert werden, da die Erreichung der Zielhöhe hier automatisch vorausgesetzt wird.

Die Simulation in Schritt c) erfolgt rechnergestützt und insbesondere im Wesentlichen automatisiert. Sie kann relativ einfach umgesetzt sein und im einfachsten Fall auf geometrischen Daten für die lokale Form und Querschnittsfläche der jeweils auszubildenden Materialraupe beruhen. Eine solche Raupe kann beispielsweise mit einer vorgegebenen Form und Größe auf der jeweiligen Unterlage "abgesetzt" werden, so dass sie diese berührt. Aus der Oberkante der so platzierten Materialraupe ergibt sich dann die lokale Höhe des neu ausgebildeten Teilelements. In einer weiteren Ausbaustufe können aber auch weitere Effekte wie Oberflächenspannung, Benetzung und Fließverhalten der Materialraupe bis zu ihrer Erstarrung berücksichtigt werden, was zu einer weiter verbesserten Vorhersage der ausgebildeten Prozessgeometrie führt. Dann wird insbesondere das Höhen-zu-Breiten-Verhältnis der gebildeten Materialraupe bei der Simulation nicht konstant gehalten, sondern im Verlauf der Materialraupe in Abhängigkeit der genannten Parameter angepasst. Schließlich kann die Simulation optional auch weitere Effekte berücksichtigen wie zum Beispiel thermische Verläufe und/oder Eigenspannungen im gebildeten Formkörper.

In Schritt d) wird auf Basis dieser Simulation ein Prozessparametersatz für die Fertigung des Formkörpers ausgewählt. Dieser ausgewählte Prozessparametersatz beinhaltet eine Variation von wenigstens einem ausgewählten Prozessparameter während der Aufbringung von wenigstens einem zusammenhängenden Teilelement. Diese Variation bewirkt, dass die Einhaltung einer Zielhöhe des gebildeten Teilelements im Verlauf der Materialraupe verbessert wird. Mit anderen Worten werden basierend auf der Simulation ein oder mehrere Maßnahmen ergriffen, um den oben beschriebenen Effekten, bei denen die Höhe der gebildeten Materialraupen von der jeweiligen Zielhöhe abweicht, entgegenzuwirken. Hierzu können während der Aufbringung einer Materialraupe ein oder mehrere ausgewählte Prozessparameter variiert werden, mit denen die Erreichung der Zielhöhe gesteuert werden kann. Dabei kann es sich insbesondere um einen Prozessparameter handeln, mit welchem die lokale Querschnittsfläche eingestellt werden kann, also beispielsweise eine Vorschubgeschwindigkeit des Druckwerkzeugs relativ zu dem Formkörper und/oder eine Extrusionsgeschwindigkeit für ein durch Extrusion aufgebrachtes Material. Alternativ kann es sich auch um eine Variation eines Werkzeugwinkels handeln, wenn dieser Winkel (z.B. beim Lichtbogenschweißen) einen Einfluss auf die Querschnittsfläche der aufgetragenen Materialraupe hat.

Durch die Variation des wenigstens einen Parameters, mit dem die Erreichung der Zielhöhe gesteuert werden kann, wird also auf Basis der Simulation eine Verbesserung bei der Erreichung der Zielhöhe erzielt. Insbesondere wird die Einheitlichkeit der erreichten Höhe entlang des Verlaufs der aufgebrachten Materialraupe verbessert. Diese Verbesserung wird auf Basis der Simulation durch die Variation des wenigstens einen ausgewählten Parameters erreicht. Mit anderen Worten wird die Übereinstimmung der simulierten Prozessgeometrie mit der Zielgeometrie im Vergleich zu einem entsprechenden Prozess, bei dem der wenigstens eine ausgewählte Parameter konstant gehalten wird, verbessert. Der in Schritt d) ausgewählte Prozessparametersatz ist also ein sogenannter "günstiger Prozessparametersatz", durch den eine verbesserte Übereinstimmung mit der Zielgeometrie erreicht wird. Dies gilt zweckmäßig nicht nur für die mit der Simulation vorhergesagte Prozessgeometrie, sondern auch für die Geometrie des in Schritt e) mit dem ausgewählten Prozessparametersatz tatsächlich hergestellten Formkörpers.

Allgemein müssen die Schritte b), c) und d) nicht sequentiell in der angegebenen Reihenfolge für den gesamten Formkörper durchlaufen werden, und es können ein oder mehrere dieser Schritte optional auch mehrfach durchlaufen werden. So kann es beispielsweise vorteilhaft sein, wenn zunächst gemäß Schritt b) einmal ein Fertigungsprozess ohne die Variation des ausgewählten Parameters bestimmt wird und anschließend basierend auf den Ergebnissen aus den Schritten c) und d) ein verbesserter Fertigungsprozess bestimmt wird, bei dem der wenigstens eine ausgewählte Prozessparameter variiert wird. Hier findet der zweite Durchlauf durch Schritt b) entweder nach den Schritten c) und d) oder parallel hierzu statt. Alternativ kann aber auch für die jeweilige Schicht bereits im ersten Durchlauf durch die Simulation ein angepasster Prozessparametersatz ausgewählt werden. Dann kann beispielsweise für jede Schicht ein Durchlauf durch Schritt c) erfolgen, bei dem gleich während der Simulation gemäß Schritt d) der zugehörige Prozessparametersatz für diese Schicht bestimmt wird. Es ist im Übrigen nicht erforderlich, dass für alle aufgebrachten Schichten eine Variation eines Prozessparameters zur Verbesserung der Erreichung der Zielhöhe erfolgt. Wesentlich ist nur, dass eine solche Variation zumindest für ein Teilelement innerhalb wenigstens einer der Schichten durchgeführt wird, um die Höhenerreichung zu verbessern. Vorteilhaft ist es jedoch, wenn eine solche Variation für mehrere Teilelemente und insbesondere auch in mehreren Schichten umgesetzt wird. Hierdurch kann die Nachbildung der Zielgeometrie des Formkörpers insgesamt wesentlich verbessert werden. Optional kann die Variation innerhalb von allen Schichten und gegebenenfalls sogar für alle dort vorliegenden Teilelemente umgesetzt werden.

Die erfindungsgemäße Vorrichtung dient zur additiven Fertigung eines Formkörpers. Sie weist eine Druckeinheit zur Aufbringung von Material in einer Abfolge von Schichten und eine Recheneinheit zur rechnergestützten Durchführung von Simulationen und zur Bestimmung von Prozessgeometrien und Prozessparametersätzen auf. Insgesamt ist die Vorrichtung dazu eingerichtet, das erfindungsgemäße Verfahren auszuführen. So ist insbesondere die Druckeinheit dazu ausgelegt, Schritt e) des Verfahrens auszuführen, und die Recheneinheit ist dazu ausgelegt, zumindest die Schritte b), c) und d) auszuführen sowie die in Schritt a) bereitgestellte Zielgeometrie einzulesen. Die Vorteile der erfindungsgemäßen Vorrichtung ergeben sich analog zu den oben beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei der Vorrichtung realisiert werden, und umgekehrt.

So kann gemäß einer ersten vorteilhaften Variante die Variation des wenigstens einen ausgewählten Prozessparameters eine Variation der Querschnittsfläche im Verlauf der Materialraupe bewirken. Unter der Querschnittsfläche wird hier die Größe der Schnittfläche orthogonal zur Längsrichtung der Materialraupe verstanden. Über eine Vergrößerung und/oder Verkleinerung der Querschnittsfläche entlang der Materialraupe lässt sich auf relativ einfache Weise eine Verbesserung in der Erreichung der Zielhöhe bewirken. So kann die Querschnittsfläche beispielsweise durch einen höheren Materialfluss und/oder eine langsamere Vorschubgeschwindigkeit erhöht werden, um lokal eine höhere Schichtdicke (also eine größere Höhe des gebildeten Teilelements senkrecht zur Schichtebene) zu erreichen, und umgekehrt. Auf diese Weise lässt sich die Querschnittsfläche insbesondere dort gezielt erhöhen, wo anderenfalls durch die oben beschriebenen Schwierigkeiten im Bereich von überhangenden Strukturen die Zielhöhe nicht erreicht würde.

Gemäß einer bevorzugten Ausführungsform dieser Variante kann die Variation der Querschnittsfläche durch eine Variation von einem oder mehreren der folgenden ausgewählten Prozessparameter erreicht werden:
- eine Vorschubgeschwindigkeit des Druckwerkzeugs relativ zu dem herzustellenden Formkörper,
- ein Materialfluss bei der Aufbringung des Materials,
- ein elektrischer Strom und/oder eine elektrische Spannung zur Erzeugung eines bei der Aufbringung verwendeten Lichtbogens,
- eine Temperatur einer für die Aufbringung verwendeten Düse oder eines zur Aufheizung einer solchen Düse verwendeten Heizelements,
- eine Zusammensetzung eines für die Aufbringung verwendeten Ausgangsmaterials,
- eine Intensität, eine Strahlbreite, eine Pulsfrequenz und/oder eine Pulsbreite eines bei der Aufbringung verwendeten Laserstrahls.

So kann beispielsweise bei konstantem Materialauftrag aus einem Druckwerkzeug durch eine Erhöhung der Vorschubgeschwindigkeit der Querschnitt verringert werden und umgekehrt. Alternativ oder zusätzlich zu der Variation des Vorschubs kann auch ein Materialfluss variiert werden. So kann zum Beispiel ein Materialfluss durch eine Extrusionsdüse relativ einfach angepasst werden. Je nach eingesetztem Auftragungsverfahren stehen jedoch noch andere Einflussgrößen zur Verfügung wie beispielsweise die Prozessparameter eines Lasers bzw. eines Lichtbogenschweißwerkzeugs. Alternativ oder zusätzlich kann auch die Zusammensetzung des eingesetzten Ausgangsmaterials variiert werden wie z.B. der Wassergehalt eines aufgebrachten Betons oder allgemein das Mischungsverhältnis verschiedener Komponenten des Ausgangsmaterials während der Aufbringung der Materialraupe, um ein verbessertes und insbesondere ein gleichmäßigeres Höhenprofil zu erreichen.

Gemäß einer zweiten vorteilhaften Variante kann die Variation des wenigstens einen ausgewählten Prozessparameters eine Variation des Winkels des Druckwerkzeugs relativ zu dem herzustellenden Formkörper sein und/oder eine solche Winkelvariation bewirken. Bei einigen additiven Fertigungsverfahren kann die Aufbringung der Materialraupe entscheidend durch solch einen Werkzeugwinkel beeinflusst werden. Insbesondere kann durch die Variation von solch einem Werkzeugwinkel die Höhe der aufgetragenen Materialraupe, ihre Querschnittsfläche und/oder die Qualität des gebildeten Teilelements gezielt beeinflusst werden. Es ist sogar möglich, dass der gewählte Werkzeugwinkel entscheidend dafür ist, ob die Aufbringung der Materialraupe im betrachteten Bereich überhaupt erfolgreich ist. Der Werkzeugwinkel hat vor allem bei den auf Lichtbogenschweißen basierenden Verfahren einen wichtigen Einfluss, da hier der Lichtbogen typischerweise zwischen dem Druckwerkzeug und der vorausgehenden Schicht ausgebildet wird. Eine Ausrichtung des Druckwerkzeugs hin zum nächstliegenden Teilelement der vorausgehenden Schicht kann die Auftragung der Materialraupe in der aktuell herzustellenden Schicht entscheidend verbessern. Dementsprechend kann eine Variation eines solchen Werkzeugwinkels während der Aufbringung einer Materialraupe dazu beitragen, ein gleichmäßigeres Höhenprofil zu erreichen und/oder unerwünschte Fehlstellen zu vermeiden.

So kann es allgemein vorteilhaft sein, die Variation des Winkels des Druckwerkzeugs so auszuführen, dass das Druckwerkzeug im Verlauf der Aufbringung der Materialraupe jeweils auf das nächstliegende Teilelement der vorausgehenden Schicht hin ausgerichtet ist. Insbesondere kann das Druckwerkzeug jeweils im Wesentlichen mittig auf dieses nächstliegende Teilelement hin ausgerichtet sein. Allerdings ist es nicht zwingend notwendig, dass eine ideale Ausrichtung auf dieses nächstliegende Teilelement erreicht wird. So kann beispielsweise ein bei der Aufbringung verwendeter Werkzeugwinkel im realen Fertigungsprozess durch maschinelle Randbedingungen begrenzt sein. Dann kann bei der Ausrichtung gegebenenfalls ein günstiger und insbesondere ein optimaler Werkzeugwinkel im Rahmen der gegebenen Randbedingungen gewählt werden. Wesentlich ist bei dieser Variante nur, dass während der Aufbringung der Materialraupe eine Variation des Werkzeugwinkels erfolgt, die zu einer Verbesserung bei der Einhaltung der Zielhöhe im Verlauf der Materialraupe beiträgt.

Allgemein vorteilhaft kann der Formkörper durch Materialextrusion gebildet werden, mit anderen Worten kann es sich bei dem additiven Fertigungsverfahren um ein extrusionsbasiertes Verfahren handeln. Bei einem solchen Materialextrusions-Verfahren wird Material selektiv durch eine Düse oder andere Öffnung abgelegt. Die gebildete Materialraupe wird entsprechend als Extrusionsraupe bezeichnet. Solche Verfahren sind typischerweise relativ einfach zu implementieren, und die Menge an aufgetragenem Material (und somit die Querschnittsfläche und/oder die Höhe der gebildeten Materialraupe) kann vergleichsweise einfach über die Veränderung eines Materialflusses durch die Extrusionsdüse angepasst werden. Beispielsweise kann das Extrusionsverfahren ein Schmelzschichtungsverfahren sein, das auch als FDM-Verfahren bezeichnet wird (FDM für englisch "fused deposition modeling"). Besonders vorteilhaft wird mit einem solchen Verfahren ein schmelzfähiger Kunststoff bzw. ein polymeres und/oder polymerhaltiges Material aufgebracht. Besonders geeignet sind Formwachse und Thermoplaste bzw. thermoplastische Elastomere. Das Ausgangsmaterial kann auch mit Metallpulvern gefüllt sein, und das additiv gefertigte Bauteil kann anschließend von Bindermaterial befreit und gesintert werden, um einen metallischen oder zumindest metallhaltigen Formkörper zu erhalten.

Alternativ kann der Formkörper bei dem additiven Fertigungsverfahren auch durch Materialauftrag mit gerichteter Energieeinbringung gebildet werden. Diese Verfahren werden in der Fachwelt auch als DED-Verfahren bezeichnet (DED für englisch "directed energy deposition"). Bei diesen Verfahren wird gebündelte thermische Energie genutzt, um Material lokal aufzubringen. Zu den verwendeten Ausgangsstoffen zählen bei diesen Verfahren Metalle in Pulverform, als Draht oder als Stangen. Die Energieeinbringung wird mittels Laserstrahl, Elektronenstrahl, Lichtbogen, Plasma, Überschallaufprall und/oder Reibung realisiert. Gemäß einer besonders vorteilhaften Ausführungsform kann das Verfahren auf Lichtbogendrahtauftrags-Schweißen basieren und insbesondere das sogenannte WAAM-Verfahren sein. Alternativ zu dem Schweißen mittels Lichtbogen kann auch ein Laser zum Schweißen des aufzubringenden Materials zum Einsatz kommen. Allgemein wird bei solchen Schweißverfahren die gebildete Materialraupe auch als Schweißraupe bezeichnet. Bei diesen Ausführungsformen, bei denen die Aufbringung der Materialraupe auf einem Schweißprozess basiert, kommen die Vorteile der Erfindung besonders wirksam zum Tragen, da es hier besonders schwierig ist, stärker überhängende Strukturen und insbesondere Brücken ohne entsprechende temporäre Stützstrukturen herzustellen. Entsprechend trägt hier die Erfindung dazu bei, Geometrien für Formkörper zu ermöglichen, die ohne die simulationsbasierte Anpassung des wenigstens einen Prozessparameters nicht in entsprechender Formtreue herstellbar wären.

Gemäß einer allgemein vorteilhaften Ausführungsform wird in Schritt d) nacheinander für die jeweils aufzubringende Schicht ein zugehöriger Prozessparametersatz für die Aufbringung der in dieser Schicht vorhandenen Teilelemente ausgewählt, bei dem jeweils eine entsprechende Parametervariation zur Verbesserung der Zielhöhen-Erreichung enthalten ist. Hierzu wird für jede dieser Schichten eine Simulation durchgeführt, wobei diese Simulation jeweils auf Grundlage der vorhergehenden Schicht erfolgt, wie sie mit dem zugehörigen ausgewählten Prozessparametersatz simuliert wurde. Besonders vorteilhaft wird für jede der aufzubringenden Schichten eine entsprechende Simulation (Schritt c)) und eine Auswahl eines Prozessparametersatzes mit entsprechender Parametervariation (Schritt d)) durchgeführt. Es ist aber nicht zwingend erforderlich, eine solche simulationsbasierte Parameteranpassung zur Verbesserung der Zielhöhen-Erreichung für jede aufzubringende Schicht durchzuführen. Zur Umsetzung des erfindungsgemäßen Gedankens reicht es allgemein aus, wenn eine solche Anpassung zumindest für ein Teilelement in wenigstens einer der aufgebrachten Schichten vorgenommen wird.

Bei den Ausführungsformen, bei denen die ausgewählten Prozessparametersätze nacheinander für eine Mehrzahl aufeinanderfolgender Schichten bestimmt werden, ist es allgemein vorteilhaft, wenn die Simulation der jeweiligen Schicht auf der Grundlage der vorhergehenden Schicht erfolgt, so wie sie mit dem zugehörigen ausgewählten Prozessparametersatz simuliert wurde. Mit anderen Worten wird also die entsprechende Parametervariation zur Anpassung der erreichten Höhe in der jeweils vorhergehenden Schicht berücksichtigt. Damit wird insgesamt in Schritt d) ein Prozessparametersatz ausgewählt, welcher eine Anpassung des wenigstens einen ausgewählten Prozessparameters vorsieht, sodass über die ganze Schichtfolge hinweg eine Verbesserung der erreichten Materialhöhen und somit insgesamt eine verbesserte Nachbildung der Zielgeometrie erreicht wird. Die beschriebene Variation durch simulationsbasierte Parameteranpassung kann dabei vorteilhaft in einer Mehrzahl von Schichten, besonders vorteilhaft in einem überwiegenden Anteil der Schichten und ganz besonders vorteilhaft sogar in allen vorliegenden Schichten umgesetzt werden.

Gemäß einer weiteren allgemein vorteilhaften Ausführungsform kann die Simulation gemäß Schritt c) einmal ohne die in Schritt d) genannte Variation durchgeführt werden und außerdem wenigstens einmal mit einer solchen Variation. Bei dieser Variante werden also aus der Simulation wenigstens zwei verschiedene vorhergesagte Prozessgeometrien erhalten, nämlich einmal ohne und wenigstens einmal mit einer simulationsbasierten Parameteranpassung zur Verbesserung des Höhenprofils. Aus einem Vergleich dieser simulierten Prozessgeometrien kann entsprechend vorhergesagt werden, wie stark die Erreichung der Zielgeometrie durch die Parametervariation bei der Herstellung des Formkörpers verbessert wird.

Weiterhin ist es allgemein vorteilhaft, wenn die Simulation in Schritt c) mehrfach durchgeführt wird, wobei der in Schritt d) genannte wenigstens eine ausgewählte Prozessparameter auf unterschiedliche Weise variiert wird und/oder wobei unterschiedliche Prozessparameter variiert werden. Insbesondere kann die Simulation nicht nur für eine oder mehrere ausgewählte Schichten, sondern für die gesamte Schichtabfolge entsprechend mehrfach durchgeführt werden. Auf diese Weise können unterschiedliche Parametervariationen miteinander verglichen und anhand ihres Einflusses auf die Verbesserung bei der Erreichung der Zielgeometrie kann ein besonders günstiger Prozessparametersatz ausgewählt werden. Insbesondere kann bei dieser Ausführungsform einmal eine Simulation durchgeführt werden, bei der eine Prozessgeometrie für eine (auf die Erreichung der jeweiligen Zielhöhe) optimierte Parametervariation berechnet wird, und einmal kann eine Simulation durchgeführt werden, bei der eine Prozessgeometrie für eine eingeschränkte Parametervariation bestimmt wird. Die eingeschränkte Parametervariation kann sich beispielsweise aus maschinellen Rahmenbedingungen der Fertigungsvorrichtung ergeben und/ oder sie kann sich aus einer geglätteten Variante der optimierten Parametervariation ergeben. Wenn die Simulation für eine solche eingeschränkte Parametervariation erneut durchgeführt wird und insbesondere für jede Schicht eine erneute Auswahl eines Parametersatzes durchgeführt wird, kann vorteilhaft ein in sich konsistenter Parametersatz abgeleitet werden, bei dem unter Einhaltung der jeweiligen Rahmenbedingungen eine hohe Verbesserung der erhaltenen Geometrie erreicht werden kann.

Ganz allgemein ist es vorteilhaft, wenn das in dem ausgewählten Prozessparametersatz enthaltene Variationsprofil für den in Schritt d) genannten wenigstens einen Prozessparameter durch eine Optimierung der Einhaltung der Zielhöhe der jeweils ausgebildeten Materialraupe innerhalb der Simulation erhalten wurde. Mit anderen Worten wird entlang der Materialraupe jeweils derjenige ausgewählte Prozessparameter eingestellt, mit welcher die Zielhöhe möglichst weitgehend erreicht wird. Diese Optimierung kann gegebenenfalls unter Berücksichtigung von Randbedingungen wie beispielsweise der Einhaltung von vorgegebenen Grenzen von Werkzeugparametern und/oder der Einhaltung von Grenzen für kurzzeitige Parameteränderungen erfolgen.

So kann insbesondere das in dem ausgewählten Parametersatz enthaltene Variationsprofil durch Glättung eines auf die Einhaltung der Zielhöhe optimierten Variationsprofils erhalten worden sein. Das optimierte Variationsprofil ist dabei dasjenige Variationsprofil, mit welchem innerhalb der Simulation entlang der aufgetragenen Materialraupe jeweils eine optimierte Einhaltung der lokalen Zielhöhe erreicht wird.

Gemäß einer weiteren allgemein vorteilhaften Ausführungsform wird aus der ermittelten Bahnbewegung des Druckwerkzeugs und/oder einem Satz von ein oder mehreren weiteren Prozessparametern ein Programm zur Bahnsteuerung eines für die Auftragung verwendeten Druckwerkzeugs erzeugt. Die Bahnbewegung des Druckwerkzeugs kann insbesondere die in Schritt b) festgelegte Bahnbewegung sein oder zumindest auf dieser basieren. Der Prozessparametersatz kann insbesondere der in Schritt d) ausgewählte Prozessparametersatz sein, welcher optional eine Anpassung der ursprünglich in Schritt b) ermittelten Bahnbewegung enthalten kann. Beispielsweise kann eine solche Anpassung darin bestehen, dass gemäß Schritt d) eine Vorschubgeschwindigkeit und/oder ein Werkzeugwinkel entlang der Materialraupe variiert werden, um die Einhaltung der Zielhöhe zu verbessern. In jedem Fall kann für den in Schritt d) ausgewählten Prozessparametersatz ein darauf angepasstes Programm zur Bahnsteuerung erzeugt werden. Dieses Programm kann beispielsweise im G-Code-Format erstellt werden, und die Fertigung des Formkörpers gemäß Schritt e) kann durch ein solches Programm gesteuert werden.

Alternativ oder zusätzlich kann auch ein entsprechendes Programm zur Bahnsteuerung erstellt werden, welches den Prozess ohne die entsprechende Parametervariation beschreibt. Dieser Referenzprozess kann insbesondere ebenfalls durch ein Programm im G-Code-Format bereitgestellt werden. So kann die Simulation in Schritt c) insbesondere ausgehend von solchen G-Code-Daten erfolgen, wobei insbesondere in Schritt d) eine Anpassung der Programmdaten in Bezug auf die beschriebene Parametervariation erfolgen kann. Dieses angepasste Programm für die Bahnsteuerung, bei dem wenigstens ein ausgewählter Prozessparameter wie oben beschrieben variiert wird, wird dann in Schritt e) für die Steuerung des Fertigungsprozesses verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine schematische perspektivische Darstellung einer Schicht aus einem Formkörper,
- FIG 2 bis 5: Querschnittsdarstellungen von additiv gefertigten Schichtsystemen,
- FIG 6: eine Zielgeometrie für einen Formkörper,
- FIG 7: eine durch Simulation vorhergesagte Prozessgeometrie,
- FIG 8: eine durch Simulation vorhergesagte Prozessgeometrie für einen ausgewählten Prozessparametersatz,
- FIG 9 und 10: Querschnittsdarstellungen von additiv gefertigten Schichtsystemen,
- FIG 11: eine schematische Darstellung eines Werkzeugs zur Aufbringung von Material in zwei verschiedenen Anordnungen und
- FIG 12: die Aufbringung von Material aus dem Werkzeug entsprechend den Anordnungen aus FIG 11.

In den FIG sind gleiche oder funktionsgleiche Elemente mit gleichen Bezugszeichen versehen.

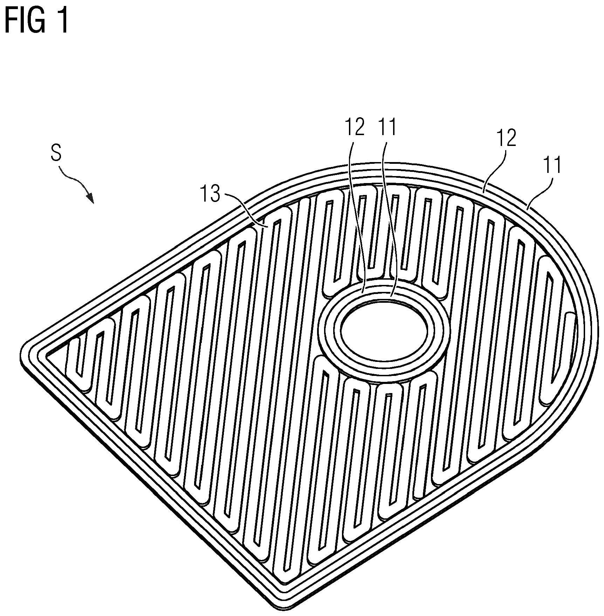

In FIG 1 ist eine schematische perspektivische Darstellung einer Schicht S aus einem Formköper gezeigt. Eine solche Schicht S kann insbesondere mit einem der aus dem Stand der Technik bekannten additiven Fertigungsverfahren hergestellt werden, wobei aus einer Mehrzahl von aufeinanderfolgenden Schichten S ein dreidimensionaler Formkörper aufgebaut wird. Bei dem Herstellungsverfahren kann es sich beispielsweise um ein Verfahren der Materialextrusion wie z.B. ein FDM-Verfahren handeln oder um ein Lichtbogenschweißverfahren wie z.B. das WAAM-Verfahren. Allgemein und unabhängig vom genauen Verfahren wird eine solche Schicht S des Schichtaufbaus durch Aufbringung einer Materialraupe erzeugt, wobei ein oder mehrere Teilelemente gebildet werden können. Im gezeigten Beispiel liegt innerhalb der Schicht S eine Mehrzahl von Teilelementen vor, nämlich zwei äußere Umfangselemente 11, vier innere Umfangselemente 12 und ein Füllelement 13. Die zwei äußeren Umfangselemente 11 begrenzen die gebildete Schicht S des Formkörpers zur äußeren Umgebung bzw. zu einem innenliegenden Hohlraum hin. An jedes äußere Umfangselement 11 grenzen jeweils zwei innere Umfangselemente 12 an, und der von diesen inneren Umfangselemente 12 zusammen eingeschlossene Bereich ist hier im Wesentlichen vollständig durch ein Füllelement 13 ausgefüllt, wobei das Füllelement 13 durch ein mäanderförmiges Füllmuster gebildet ist. Alle genannten Teilelemente sind durch Aufbringung einer zusammenhängenden Materialraupe aus einem während der Aufbringung fließfähigen Material gebildet. Nach der Aufbringung geht dieses Material in einen festen Zustand über, so dass insgesamt ein fester Formkörper aus einer Abfolge von solchen Schichten S gebildet wird.

Bei der in FIG 1 dargestellten Schicht S weisen die einzelnen Teilelemente 11, 12 und 13 teilweise unterschiedliche Querschnittsflächen auf. So haben die Umfangselemente 11 und 12 hier beispielsweise eine andere Querschnittsfläche als das innenliegende Füllelement 13. Innerhalb jedes der vorliegenden Teilelemente 11, 12, 13 sind die Querschnitte über die Ausdehnung der jeweiligen Materialraupe hinweg jedoch im Wesentlichen konstant. Dies ist dadurch bedingt, dass bei der Aufteilung einer Zielgeometrie in einzelne Schichten S und bei der Aufteilung dieser Schichten S in einzelne Teilelemente 11, 12, 13 durch einen sogenannten Slicer typischerweise raupenartige Formen mit konstantem Querschnitt innerhalb der Teilelemente gewählt werden. Für jedes Teilelement 11, 12, 13 wird dann von dem Slicer eine Bahnbewegung für ein Druckwerkzeug festgelegt, mit welcher das jeweilige Teilelement 11, 12, 13 erzeugt werden kann. Die Bahnbewegungen werden typischerweise aus Geraden und Kreisbögen zusammengesetzt. Zusätzlich zu der jeweiligen Bahnbewegung können weitere Prozessparameter festgelegt werden, beispielsweise eine Extrusionsgeschwindigkeit für das jeweilige Bahnsegment. Diese Bahnbewegungen werden typischerweise im G-Code-Format erzeugt.

Ein G-Code-Abschnitt für einen FDM-Drucker kann beispielsweise wie folgt aussehen:
G1 X=82.942 Y=-105.993 Z=103.5 E=0.0 F=330.0
G1 X=85.883 Y=-105.993 Z=103.5 E=5.6
G1 X=88.825 Y=-105.993 Z=103.5 E=4.8
G1 X=91.767 Y=-105.993 Z=103.5 E=5.2

Dabei gibt in jeder Zeile der erste Befehl den Bewegungstyp an, wobei "G1" für eine Bewegung entlang einer Geraden steht. X, Y und Z geben die bei jeder Bewegung anzusteuernden kartesischen Koordinaten an, denen in dem Programm jeweils ein Wert zugeordnet wird. Der nächste Befehl ordnet einer sogenannten Extrusionsachse E einen bestimmten Wert zu. So wird z.B. durch den Befehl "E=5.6" ein extrudiertes Volumen von 5,6 Kubikmillimetern für die Bahnbewegung der zweiten Zeile festgelegt. Durch den optional vorhandenen nächsten Befehl wird eine Soll-Geschwindigkeit festgelegt, die mit F (für englisch "feedrate") bezeichnet ist. Hier wird ein Wert in mm/s festgelegt, mit dem das Druckwerkzeug bewegt wird. Wenn in einer Zeile kein neuer Wert für die Geschwindigkeit festgelegt wird, wird für die zugehörige Bahn der vorhergehende Wert beibehalten.

Im Unterschied dazu kann ein G-Code-Abschnitt für eine WAAM-Vorrichtung wie folgt aussehen:
WAAMSTART S=60.0
G1 X=82.942 Y=-105.993 Z=103.5 F=330.0
G1 X=85.883 Y=-105.993 Z=103.5
G1 X=88.825 Y=-105.993 Z=103.5
G1 X=91.767 Y=-105.993 Z=103.5

Der Befehl in der ersten Zeile legt einen Soll-Materialfluss für die Schweißquelle in Kubikmillimetern pro Sekunde fest, welcher in den nächsten Schritten konstant gehalten wird. Die Befehle in den nachfolgenden Zeilen sind analog wie die Bahnbefehle für den FDM-Drucker, außer dass hier eine konstante Materialzufuhr für den Schweißprozess verwendet wird und entsprechend kein Wert für den Extrusionsparameter vorliegt. Unabhängig vom angewendeten Verfahren berechnen die meisten Slicer die Bahnen und die Prozessparameter für die additive Fertigung mit fließfähigen Materialraupen mit konstanten Materialquerschnitten für jedes gebildete Teilelement.

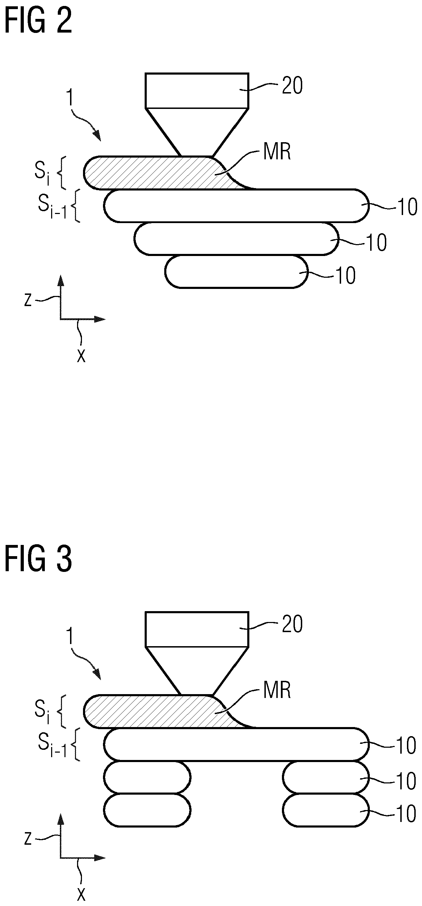

In FIG 2 ist eine schematische Querschnittsdarstellung für ein additiv zu fertigendes Schichtsystem gezeigt, welches wiederum mit einem Verfahren nach dem Stand der Technik erzeugt werden kann. Insgesamt wird durch die Schichtabfolge ein dreidimensionaler Formkörper 1 gebildet, von dem hier nur ein Ausschnitt gezeigt ist. Gezeigt sind hier vier Schichten, von denen die oberste Schicht Sᵢ gerade abgeschieden wird. Die Abscheidung erfolgt durch Aufbringen einer Materialraupe MR aus fließfähigem Material mittels eines Druckwerkzeugs 20. In den vorausgehenden Schichten liegen bereits Teilelemente 10 vor, welche in entsprechender Weise mit demselben Druckwerkzeug aus solchen Materialraupen gebildet wurden. Die neu gebildete Materialraupe MR wird also auf ein Teilelement 10 der unmittelbar vorausgehenden Schicht Sᵢ₋₁ aufgetragen.

Allgemein soll hier und auch bei den nachfolgenden Beispielen die z-Achse die vertikale Achse orthogonal zum Schichtsystem darstellen, und die x- und y-Achsen sollen die lateralen Achsen parallel zu den jeweiligen Schichten darstellen. Beim Beispiel der FIG 2 wird durch den Schichtstapel eine überhängende Struktur gebildet, bei der die Teilelemente 10 der in z-Richtung obenliegenden (also später ausgebildeten) Schichten in lateraler Richtung über die darunterliegenden Schichten hinausragen. Solche überhängenden Strukturen stellen viele additive Fertigungsverfahren vor Herausforderungen. Mit dem FDM-Verfahren können beispielsweise Überhänge gebildet werden, bei denen die gebildeten Flanken Winkel mit der z-Achse von bis zu 45° bis 60° ausbilden können. Mit dem WAAM-Verfahren ist dagegen auch die Ausbildung von nur schwach überhängenden Strukturen äußerst schwierig.

In FIG 3 ist eine schematische Querschnittsdarstellung für ein ähnliches Schichtsystem eines herzustellenden Formkörpers 1 gezeigt. Im Unterschied zum Beispiel der FIG 2 wird hier nicht ein Überhang, sondern eine Brücke ausgebildet, bei der durch die obenliegenden Schichten Sᵢ und Sᵢ₋₁ ein darunterliegender Hohlraum überspannt wird. Auch hier gilt, dass z.B. mit dem FDM-Verfahren solche freihängenden Brücken ausgebildet werden können, sofern sie nicht zu lang sind. Dagegen ist die Ausbildung von Brücken mit dem WAAM-Verfahren sehr problematisch und in der Praxis meist unmöglich.

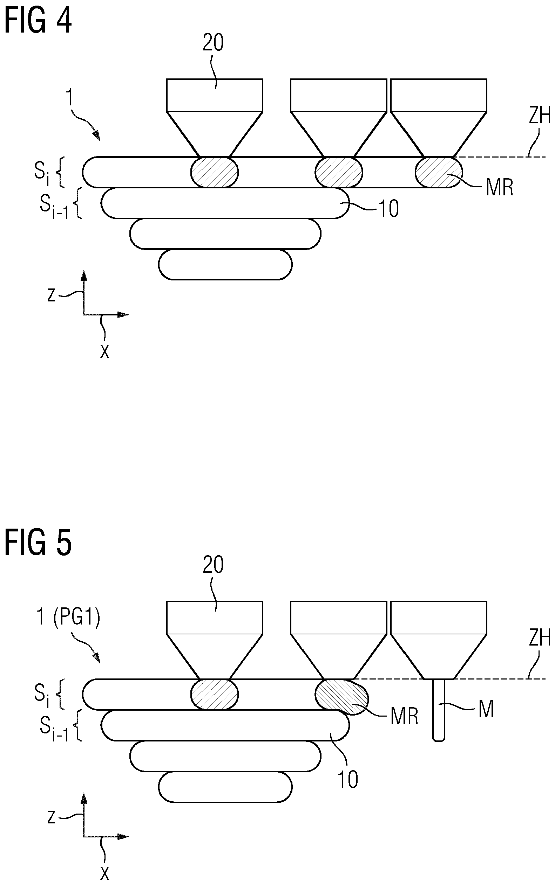

FIG 4 zeigt eine ähnliche schematische Querschnittsdarstellung für ein Schichtsystem eines Formkörpers, bei welchem sowohl eine überhängende Struktur als auch eine Materialbrücke gebildet werden soll. Die Abbildung zeigt eine berechnete Prozessgeometrie wie sie von einem Slicer im Rahmen der Bahnberechnung erzeugt wird. Dabei wird eine geometrische Simulation der durch die Materialraupen MR erzeugten Teilelemente des Formkörpers 1 durchgeführt. Diese Simulation basiert typischerweise auf idealisierten Annahmen, wie im Folgenden für drei ausgewählte Werkzeugpositionen näher erläutert werden soll. So ist im linken Teil der FIG 4 eine Position des Druckwerkzeugs 20 dargestellt, bei welcher die Materialraupe MR der aktuell herzustellenden Schicht Sᵢ unmittelbar auf einem Teilelement 10 der vorausgehenden Schicht Sᵢ₋₁ zu liegen kommt. Für eine solche günstige Werkzeugposition wird die von dem Slicer berechnete Geometrie und Position der gebildeten Materialraupe MR im allgemeinen relativ gut vorhergesagt. Die berechnete Geometrie der erzeugten Materialraupe MR wird dabei typischerweise so gebildet, dass ausgehend von der Unterkante des Druckwerkzeugs 20 ein länglicher, raupenförmiger Körper mit einer vorgegebenen Zielhöhe ZH und einer vorgegebenen elliptischen Querschnittsform erzeugt wird. Die Zielhöhe ZH entspricht dabei der Dicke der jeweiligen Schicht Sᵢ und somit der gewünschten Ausdehnung der gebildeten Materialraupe in z-Richtung. Bei den bekannten Verfahren wird bei der Modellierung durch den Slicer typischerweise davon ausgegangen, dass diese Zielhöhe erreicht wird und entsprechend die Position und Höhe in z-Richtung der jeweils gebildeten Materialraupe korrekt ist. Entsprechend wird die Oberkante der Materialraupe an der Unterkante des Druckwerkzeugs 20 gebildet, so dass ihre Höhe der Zielhöhe ZH genau entspricht. Wenn wie bei der linken Werkzeugposition die Abscheidung bündig auf einer entsprechenden Unterlage mit korrekter Höhe stattfindet, ist diese Annahme typischerweise zutreffend. Wenn dagegen wie bei der mittleren Werkzeugposition eine Auftragung am Rand des darunterliegenden Teilelements 10 stattfindet, dann ist die vom Slicer typischerweise angenommene Erreichung der Zielhöhe ZH in der neuen Schicht Sᵢ bei den meisten Druckverfahren nicht realistisch. Dies gilt erst recht, wenn wie bei der rechts dargestellten Werkzeugposition gar kein vorhergehendes Teilelement als Grundlage für die neu gebildete Materialraupe MR vorhanden ist. Dann wird die in FIG 4 dargestellte, von einem herkömmlichen Slicer angenommene Prozessgeometrie mit einem realen additiven Fertigungsverfahren typischerweise nicht erreicht.

FIG 5 zeigt eine ähnliche schematische Querschnittsdarstellung für ein berechnetes Schichtsystem eines Formkörpers. Im Unterschied zu dem Schichtsystem der FIG 4 ist hier eine Prozessgeometrie PG1 gezeigt, wie sie während des erfindungsgemäßen Verfahrens berechnet wurde. Im Unterschied zum herkömmlichen Simulationsverfahren wird hierbei nicht davon ausgegangen, dass die neu ausgebildete Materialraupe an jeder Stelle die Zielhöhe ZH erreicht. Vielmehr wird simuliert, wie das neu aufgebrachte fließfähige Material auf dem bereits vorliegenden Schichtsystem abgelagert wird. Insbesondere wird das neu aufgetragene Material auf dem nächstliegenden Teilelement 10 der unmittelbar vorausgehenden Schicht Sᵢ₋₁ abgelegt, sofern im Bereich des neuen Materialauftrags eine solche Struktur vorhanden ist. Dieser Fall ist für die mittlere Werkzeuggeometrie dargestellt: Hier wird das neue fließfähige Material auf dem Rand des darunterliegenden Teilelements 10 abgelegt, wo es zwar anhaftet und eine neue Struktur ausbildet. Allerdings wird bei Berücksichtigung der Geometrie der vorausgehenden Schicht als Ausgangsbasis die Zielhöhe ZH für die neu ausgebildete Materialraupe MR an dieser Stelle nicht erreicht. Durch die Berücksichtigung der bereits gebildeten Geometrie in der Simulation wird damit im Rahmen der vorliegenden Erfindung eine Vorhersage von Fehlern in der Geometrie der neu ausgebildeten Schicht Sᵢ ermöglicht. Noch deutlicher ist der Unterschied für die rechte Werkzeugposition: Hier ist direkt unterhalb der neu auszubildenden Materialraupe MR gar kein vorhergehendes Teilelement vorhanden. Bei Berücksichtigung dieser Eigenschaft der vorgehenden Schicht wird die Simulation vorhersagen, dass das neu aufgetragene Material ins Leere geht (wie durch den senkrechten Stricht angedeutet) und sich nicht mit der - nicht vorhandenen - vorhergehenden Schicht verbindet. Entsprechend geht das hier deponierte Material verloren und trägt nicht zum Aufbau des zu bildenden Formkörpers 1 bei. Im Rahmen des erfindungsgemäßen Verfahrens werden solche Unzulänglichkeiten bei der Simulation der Prozessgeometrie PG1 berücksichtigt, und die vorhergesagte Prozessgeometrie PG1 kann entsprechende Defektbereiche und Fehlstellen enthalten.

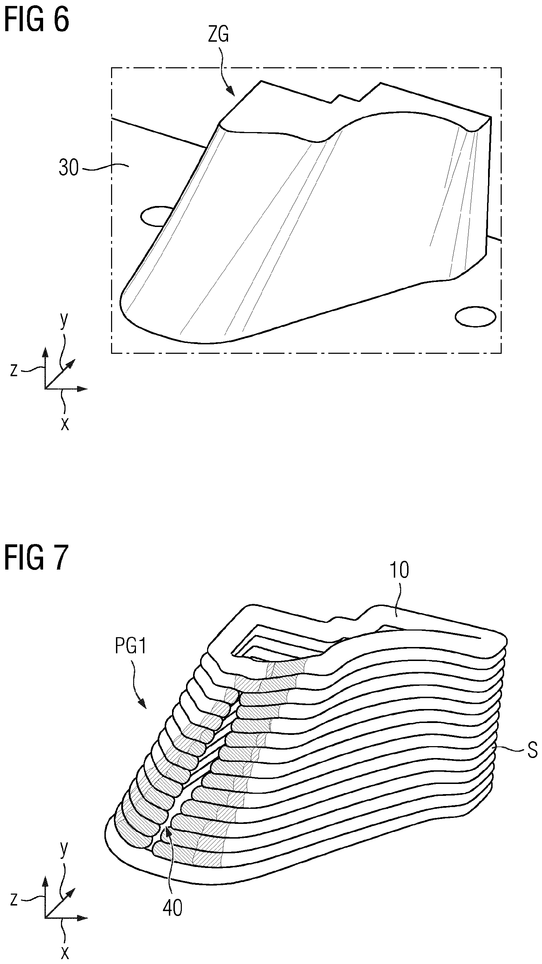

FIG 6 zeigt eine Zielgeometrie ZG, deren Außenkontur ein mit dem erfindungsgemäßen Verfahren herzustellender Formkörper 1 nachbilden soll, in schematischer perspektivischer Darstellung. Auch hier stellt die z-Achse diejenige Achse dar, welche orthogonal zum auszubildenden Schichtaufbau liegt. Mit 30 ist eine Bodenplatte bezeichnet, auf welcher das Schichtsystem aufgebaut werden soll und auf welchem entsprechend die zuerst gebildete Schicht abgeschieden wird. Eine solche Zielgeometrie ZG wird in Schritt a) des erfindungsgemäßen Verfahrens bereitgestellt. In Schritt b) des Verfahrens wird ein Prozessparametersatz zur Fertigung eines solchen Formkörpers 1 festgelegt, wobei eine Abfolge von Schichten festgelegt wird und eine Abfolge von Bahnbewegungen eines Druckkopfes festgelegt wird, so dass diese Zielgeometrie ZG mit einem zugehörigen additiven Fertigungsprozess näherungsweise nachgebildet werden kann. Dabei wird in Schritt c) des Verfahrens eine Simulation zur Vorhersage einer ausgebildeten Prozessgeometrie durchgeführt.

FIG 7 zeigt ein Ergebnis einer solchen Simulation, nämlich eine schematische perspektivische Darstellung einer ersten Prozessgeometrie PG1, wie sie von der Simulation vorhergesagt wurde. Bei dieser Simulation wurde für jede der gebildeten Schichten S ein Materialauftrag berechnet, wie er auf Grundlage der jeweils vorausgehenden Schicht zu erwarten ist, ähnlich wie dies im Zusammenhang mit FIG 5 erläutert wurde. Als Folge der Berücksichtigung der bereits ausgebildeten Geometrie werden bei der ersten simulierten Prozessgeometrie PG1 Unzulänglichkeiten im Schichtsystem vorhergesagt: So kennzeichnen die stärkeren Schraffuren diejenigen Bereiche des Schichtsystems, in denen die jeweilige vorgegebene Zielhöhe ZH (so wie sie in Schritt b) bei der Zerlegung in Schichten zugrundegelegt wurde) nicht erreicht wird. In dem mit 40 markierten Bereich wird von der Simulation ein Defektbereich vorhergesagt, in dem aufgrund der starken Schräglage im Umriss der Zielgeometrie gar kein Materialauftrag stattfindet. Entsprechend kommt es hier im unteren Bereich des Schichtsystems zu einer unerwünschten Lücke, die erst im obenliegenden Bereich des Stapels durch spätere Schichten S überbrückt werden kann.

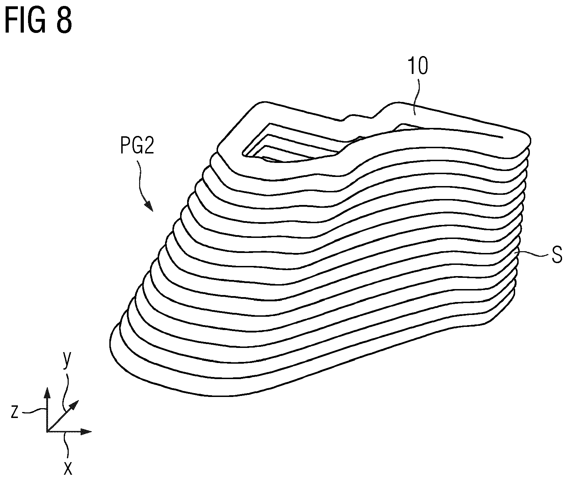

Die Simulation der FIG 7 legt die Prozessparameter eines WAAM-Verfahrens zugrunde. In analoger Weise kann die Simulation der Prozessgeometrie PG1 auf Grundlage der jeweils vorausgehenden Schichten aber auch auf andere Fertigungsverfahren wie beispielsweise das FDM-Verfahren angewendet werden. Abhängig von den Parametern des Verfahrens können die vorhergesagten Defekte und/oder Fehlstellen dann stärker oder schwächer ausfallen. Die in FIG 7 dargestellte simulierte Prozessgeometrie basiert auf einem Prozessparametersatz, bei welchem innerhalb der einzelnen Materialraupen keine Parameteranpassung zur Verbesserung der Höhenerreichung vorgesehen ist. Im Unterschied dazu zeigt FIG 8 eine zweite simulierte Prozessgeometrie PG2, wie sie bei Variation eines ausgewählten Parameters während der Aufbringung der einzelnen Materialraupen erhalten wurde. Ähnlich wie bei der Simulation der FIG 7 wurde auch hier die Simulation jeder einzelnen Schicht S auf Grundlage der Geometrie der vorhergehenden Schicht durchgeführt. Im Unterschied dazu wurde bei diesem Beispiel jedoch bei jeder der aufgebrachten Materialraupen die Vorschubgeschwindigkeit so angepasst, dass an der jeweiligen Werkzeugposition im Rahmen der Simulation die Zielhöhe der gebildeten Materialraupe weitgehend erreicht wird. Der Unterschied in den beiden vorhergesagten Prozessgeometrien PG1 und PG2 der FIG 7 und 8 kommt also dadurch zustande, dass durch die Variation der Vorschubgeschwindigkeit der Materialquerschnitt der gebildeten Materialraupe beeinflusst werden kann. Konkret wird in den Bereichen, in denen eine überhängende Flanke ausgebildet wird, der Materialquerschnitt so erhöht, dass die Zielhöhe trotz der überhängenden Stuktur weitgehend erreicht wird. So wird für jede Schicht ein optimiertes Parameterprofil erhalten, wodurch die Ausbildung von geometrischen Abweichungen verringert wird. In FIG 8 ist deutlich zu sehen, dass aufgrund der Parameteranpassung und der daraus resultierenden verbesserten Materialhöhe in den einzelnen Schichten keine Lücke mehr entsteht. Unter Umständen ist auch hier die Erreichung der Zielhöhe nicht überall perfekt, sie wird durch die Anpasssung des Materialquerschnitts aber wesentlich verbessert. Insgesamt wird somit basierend auf der Simulation ein günstiger Parametersatz erhalten, bei dem durch Parameteranpassung die Höhenerreichung der Schichten verbessert wird. Dies entspricht Schritt d) des erfindungsmäßen Verfahrens. Dadurch wird eine verbesserte Nachbildung der Zielgeometrie ZG aus FIG 6 erreicht. Die Verbesserung wird hier durch eine Variation der Vorschubgeschwindigkeit des Druckwerkzeugs erzielt, aber prinzipiell kommen in Abhängigkeit von dem gewählten Fertigungsverfahren auch zahlreiche andere Prozessparameter in Frage, durch deren Variation im Verlauf der Materialraupe eine Verbesserung der Höhenerreichung erzielt werden kann.

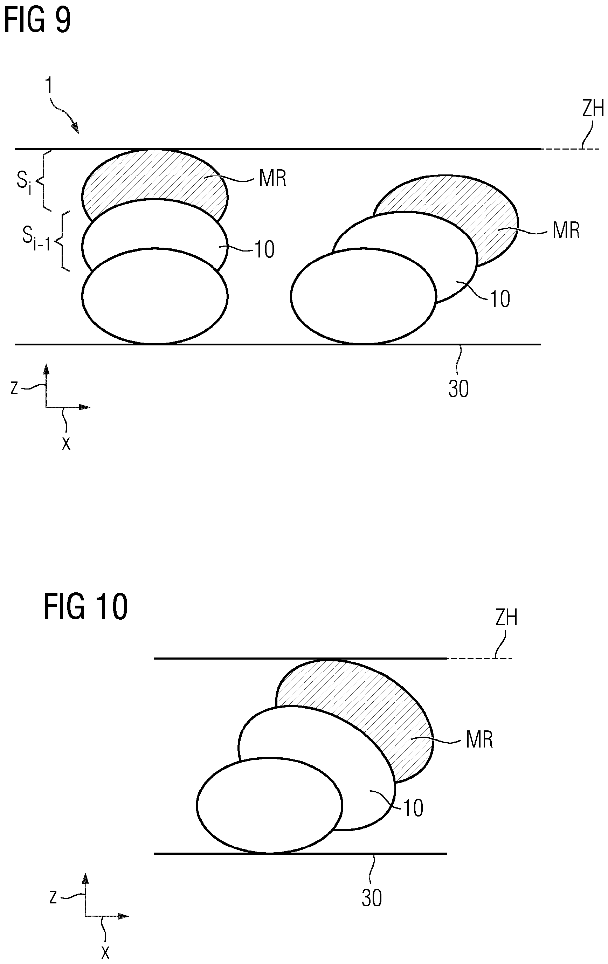

FIG 9 zeigt eine schematische Querschnittsdarstellung eines additiv gefertigten Schichtsystems, wie es für die Prozessparameter eines WAAM-Verfahrens vorhergesagt wird. Gezeigt sind hier drei Schichten, wobei die unterste Schicht auf einer Bodenplatte 30 aufgebracht wird. Die Zielhöhe ZH der obersten Schicht, so wie sie sich durch Zerlegung der zugehörigen Zielgeometrie ergibt, ist ebenfalls durch eine Linie angedeutet. Hier ist wiederum eine simulierte Prozessgeometrie gezeigt, wie sie ohne Parametervariation zur Steuerung der Höhenerreichung vorhergesagt wird. So wird im linken Teil der FIG 9, wo die ausgebildeten Materialraupen bündig übereinanderliegen, die Zielhöhe ZH erreicht. Im rechten Teil dagegen, wo eine überhängende Flanke ausgebildet wird, wird ähnlich wie bei FIG 5 die Zielhöhe ZH nicht erreicht. Beim WAAM-Verfahren ist die Abweichung von der Zielhöhe schon für leicht überhängende Strukturen besonders gravierend, da die Ausbildung des Lichtbogens für den Materialauftrag zwischen dem Druckwerkzeug und dem nächstliegenden metallischen Teilelement 10 der jeweils vorhergehenden Schicht Sᵢ₋₁ ausgebildet wird. Wenn dieses vorhergehende Teilelement 10 gegenüber der neu auszubildenden Schweißraupe MR lateral (d.h. in x- und/ oder y-Richtung) verschoben ist, dann wird an dieser Stelle bei gleichen Prozessparametern weniger Material aufgebracht, und die Zielhöhe wird deutlich unterschritten.

In FIG 10 ist gezeigt, wie diesem Effekt durch Parameteranpassung entgegengewirkt werden kann: So kann beim WAAM-Verfahren der ausgebildete Materialquerschnitt bei überhängenden Flanken dadurch erhöht werden, dass abhängig von der Geometrie der jeweils vorhergehenden Schicht der Werkzeugwinkel des Druckwerkzeugs (hier also des Schweißwerkzeugs) während der Ausbildung der Materialraupe variiert wird. Dazu wird das Schweißwergzeug im Bereich von überhängenden Flanken relativ zur z-Achse gekippt. Dadurch ergibt sich einerseits eine Schräglage der ausgebildeten Materialraupe (wie in FIG 10 durch die schrägliegende elliptische Querschnittsfläche dargestellt) und andererseits eine Erhöhung der Querschnittsfläche des aufgebrachten Materials, da bei gleicher Vorschubgeschwindigkeit der Materialauftrag erhöht wird, wenn das Schweißwerkzeug zu einer metallischen Struktur der darunterliegenden Schicht hin ausgerichtet ist.

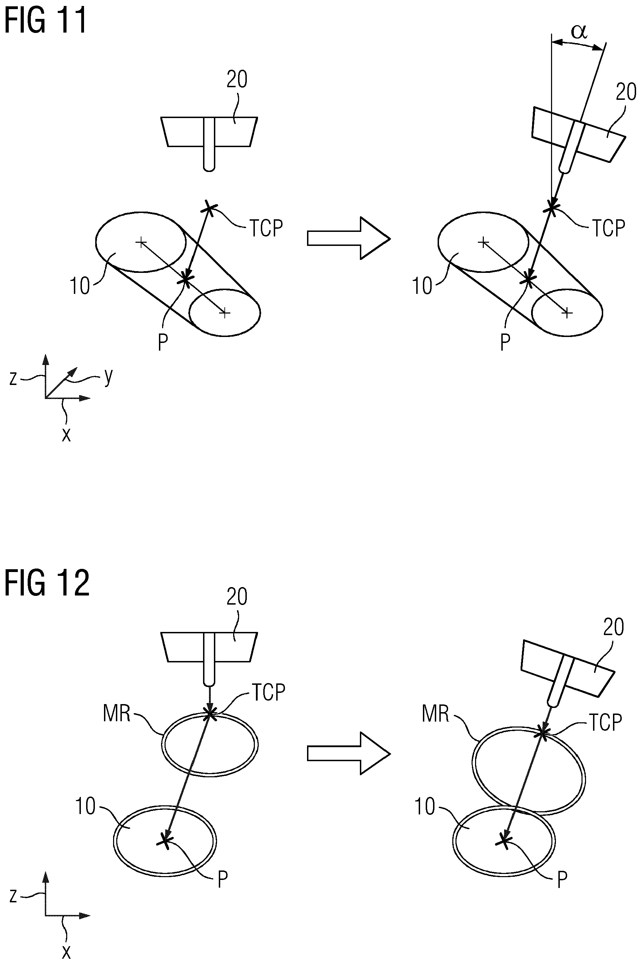

In den FIG 11 und 12 ist der Effekt der Veränderung des Werkzeugwinkels beim WAAM-Verfahren noch einmal ausführlicher dargestellt. So zeigt FIG 11 eine schematische Teil-Schnittdarstellung eines Werkzeugs 20 über einem bereits gebildeten Teileelement 10 einer vorausgehenden Schicht, wobei durch Ausbildung eines Lichtbogens zwischen dem Werkzeug 20 und diesem Teilelement 10 im Rahmen eines Schweißprozesses eine weitere Materialraupe abgeschieden werden soll. Der Werkzeugmittelpunkt, bei dem die Ausbildung des Lichtbogens am stärksten ist, wird mit TCP (für englisch "tool center point") bezeichnet. Im linken Teil der FIG 11 ist das Werkzeug 20 vertikal, also parallel zur z-Achse ausgerichtet. Der Werkzeugmittelpunkt TCP liegt daher im Bereich einer überhängenden Flanke seitlich versetzt zum nächstliegenden Punkt P der vorhergehenden Schweißraupe 10. Dies sind ungünstige Prozessparameter für den Schweißprozess, und es kann ähnlich wie in FIG 7 zu einer Fehlstelle kommen. Im rechten Teil der FIG 11 ist eine verbesserte Prozessführung dargestellt, bei der durch Variation des Werkzeugwinkels α entlang der neu aufzubringenden Schweißraupe erreicht wird, dass das Werkzeug 20 jeweils auf den nächstliegenden Mittelpunkt P des darunterliegenden Teilelements 10 ausgerichtet ist.

In FIG 12 ist für diese beiden Werkzeugwinkel in schematischer Schnittdarstellung gezeigt, wie gemäß der Simulation über dem vorhergehenden Teilelement 10 eine neue Materialraupe MR aufgetragen wird. Im linken Teil der FIG 12 wurde dabei das herkömmliche Simulationsverfahren verwendet, bei dem das neu aufgebrachte Material mit seiner Oberkante am Werkzeugmittelpunkt TCP "abgesetzt" wird. Bei dem zu erwartenden Materialquerschnitt, der aufgrund des lateralen Versatzes vergleichsweise gering ist, wird dabei allerdings keine Anbindung an das darunterliegende Teilelement 10 erzielt. Die Annahme ist also unrealistisch, und es wird keine präzise Vorhersage der zu erwartenden Prozessgeometrie erhalten. Im rechten Teil der FIG 12 ist einerseits das Werkzeug 20 relativ zu z-Achse gekippt, und andererseits wurde die Simulation des Materialauftrags im Rahmen des erfindungsgemäßen Verfahrens auf der Grundlage der vorhergehenden Schicht durchgeführt. Im Ergebnis wird eine realistischere Vorhersage der zu fertigenden Struktur erhalten. Außerdem kann durch die Variation des Werkzeugwinkels α, die auf Grundlage einer solchen Simulation bestimmt wird, eine allgemeine Verbesserung der Höhenerreichung erzielt werden.

Wenn eine entsprechend günstige Ausrichtung des Druckwerkzeugs 20 im gesamten Verlauf der neu gebildeten Materialraupe erreicht werden soll, ist typischerweise eine laufende Anpassung des Werkzeugwinkels α notwendig. Gegebenenfalls wird eine solche Anpassung durch Werkzeuggrenzen eingeschränkt und/oder es kann eine Glättung des optimierten Winkelprofils zweckmäßig sein, um allzu plötzliche Winkeländerungen zu vermeiden. In jedem Fall wird auch hierbei durch Parameteranpassung eine Verbesserung der Höhenerreichung in der neu auszubildenden Schicht erzielt.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Formkörper
- 10: Teilelement
- 11: Teilelement (äußeres Umfangselement)
- 12: Teilelement (inneres Umfangselement)
- 13: Teilelement (Füllelement)
- 20: Druckwerkzeug (Druckkopf)
- 30: Bodenplatte
- 40: Defektbereich
- α: Werkzeugwinkel
- M: fließfähiges Material
- MR: Materialraupe
- P: nächstliegender Mittelpunkt
- PG1: erste Prozessgeometrie
- PG2: zweite Prozessgeometrie
- S: Schicht
- Sᵢ: aktuell zu fertigende Schicht
- Sᵢ₋₁: vorausgehende Schicht
- TCP: Werkzeugposition
- ZG: Zielgeometrie
- ZH: Zielhöhe
- z: Höhenkoordinate
- x,y: laterale Koordinaten

## Patentansprüche

1. Verfahren zur additiven Fertigung eines Formkörpers (1) durch Aufbringung von Material in einer Mehrzahl aufeinanderfolgender Schichten (S), wobei in der jeweiligen Schicht (S) wenigstens ein Teilelement (10) durch die Aufbringung einer zusammenhängenden Materialraupe (MR) aus fließfähigem Material gebildet wird, mit den folgenden Schritten:
a) Bereitstellung einer Zielgeometrie (ZG) für den Formkörper (1),
b) Bestimmung wenigstens eines Prozessparametersatzes zur Fertigung des Formkörpers (1), wobei eine Abfolge von Schichten (S) festgelegt wird und für jede Schicht (S) wenigstens eine Bahnbewegung eines Druckwerkzeugs (20) zur Aufbringung des Materials festgelegt wird, wobei die Abfolge der Bahnbewegungen in ihrer Gesamtheit geeignet ist, um bei Anwendung auf das Druckwerkzeug (20) den Formkörper (1) additiv herzustellen und dabei die Zielgeometrie (ZG) zumindest näherungsweise nachzubilden,
c) Vorhersage von wenigstens einer Prozessgeometrie (PG1, PG2) für den Formkörper (1) durch rechnergestützte Simulation in Abhängigkeit des wenigstens einen Prozessparametersatzes, wobei bei der Simulation der Aufbringung der jeweiligen Schicht (Sᵢ) die vorhergesagte Geometrie der jeweils vorausgehenden Schicht (Sᵢ₋₁) als Ausgangsbasis verwendet wird,
d) Auswahl eines Prozessparametersatzes auf Basis der Simulation, welcher eine Variation von wenigstens einem Prozessparameter bei der Aufbringung von wenigstens einer zusammenhängenden Materialraupe (MR) beinhaltet, wobei diese Variation bewirkt, dass die Einhaltung einer Zielhöhe (ZH) des gebildeten Teilelements (10) im Verlauf der Materialraupe (MR) verbessert wird,
e) Fertigung des Formkörpers (1) unter Verwendung des in Schritt d) ausgewählten Prozessparametersatzes.

2. Verfahren nach Anspruch 1, bei welchem die Variation des wenigstens einen Prozessparameters eine Variation der Querschnittsfläche im Verlauf der Materialraupe (MR) bewirkt.

3. Verfahren nach Anspruch 2, bei welchem die Variation der Querschnittsfläche durch eine Variation von wenigstens einem der folgenden Prozessparameter erreicht wird:
- eine Vorschubgeschwindigkeit des Druckwerkzeugs (20) relativ zu dem herzustellenden Formkörper (1),
- ein Materialfluss bei der Aufbringung des Materials,
- ein elektrischer Strom und/oder eine elektrische Spannung zur Erzeugung eines bei der Aufbringung verwendeten Lichtbogens,
- eine Temperatur einer für die Aufbringung des Materials verwendeten Düse oder eines zur Aufheizung der Düse verwendeten Heizelements,
- eine Zusammensetzung eines für die Aufbringung verwendeten Ausgangsmaterials,
- eine Intensität, eine Strahlbreite, eine Pulsfrequenz und/oder eine Pulsbreite eines bei der Aufbringung verwendeten Laserstrahls.

4. Verfahren nach einem der vorhergehenden Ansprüche, bei welchem die Variation des wenigstens einen Prozessparameters eine Variation des Winkels (α) des Druckwerkzeugs (20) relativ zu dem herzustellenden Formkörper (1) ist oder bewirkt.

5. Verfahren nach Anspruch 4, bei welchem die Variation des Winkels (α) des Druckwerkzeugs (20) so ausgeführt wird, dass das Druckwerkzeug (20) im Verlauf der Aufbringung der Materialraupe (MR) jeweils auf das nächstliegende Teilelement (10) der vorausgehenden Schicht (Sᵢ₋₁) hin ausgerichtet ist.

6. Verfahren nach einem der Ansprüche 1 bis 5, bei welchem der Formkörper (1) durch Materialextrusion gebildet wird, wobei die aufgebrachte Materialraupe (MR) eine Extrusionsraupe ist.

7. Verfahren nach Anspruch 6, bei welchem der Formkörper (1) durch ein Schmelzschichtungs-Verfahren gebildet wird, wobei das aufgebrachte Material insbesondere ein polymeres und/oder polymerhaltiges Material ist.

8. Verfahren nach einem der Ansprüche 1 bis 5, bei welchem der Formkörper (1) durch Materialauftrag mit gerichteter Energieeinbringung gebildet wird, insbesondere durch Lichtbogendrahtauftrags-Schweißen.

9. Verfahren nach einem der vorhergehenden Ansprüche, bei welchem in Schritt d) nacheinander für die aufzubringenden Schichten (Sᵢ) ein zugehöriger Prozessparametersatz für die in der jeweiligen Schicht (Sᵢ) vorhandenen Teilelemente (10) ausgewählt wird, wobei die Simulation der jeweiligen Schicht (Sᵢ) auf Grundlage der vorausgehenden Schicht (Sᵢ₋₁) erfolgt, wie sie mit dem zugehörigen ausgewählten Prozessparametersatz simuliert wurde.

10. Verfahren nach einem der vorhergehenden Ansprüche, bei welchem die Simulation in Schritt c) einmal ohne die in Schritt d) genannte Variation durchgeführt wird und wenigstens einmal mit der in Schritt d) genannten Variation durchgeführt wird.

11. Verfahren nach einem der vorhergehenden Ansprüche, bei welchem die Simulation in Schritt c) mehrfach durchgeführt wird, wobei der in Schritt d) genannte wenigstens eine Prozessparameter auf unterschiedliche Weise variiert wird.

12. Verfahren nach einem der vorhergehenden Ansprüche, bei welchem das in dem in Schritt d) ausgewählten Prozessparametersatz enthaltene Variationsprofil für den wenigstens einen Prozessparameter durch eine Optimierung der Einhaltung der Zielhöhe (ZH) innerhalb der Simulation bestimmt wird.

13. Verfahren nach einem der vorhergehenden Ansprüche, bei welchem das in dem in Schritt d) ausgewählten Prozessparametersatz enthaltene Variationsprofil für den wenigstens einen Prozessparameter durch Glättung eines auf die Einhaltung der Zielhöhe (ZH) optimierten Variationsprofils erhalten wurde.

14. Verfahren nach einem der vorhergehenden Ansprüche, bei welchem aus der ermittelten Bahnbewegung des Druckwerkzeugs (20) und/oder einem weiteren Prozessparametersatz ein Programm zur Bahnsteuerung des Druckwerkzeugs (20) erzeugt wird.

15. Vorrichtung zur additiven Fertigung eines Formkörpers (1), welche eine Druckeinheit zur Aufbringung von Material in einer Abfolge von Schichten (S) und eine Recheneinheit zur rechnergestützten Durchführung von Simulationen und zur Bestimmung von Prozessgeometrien und Prozessparametersätzen aufweist, wobei die Vorrichtung insgesamt dazu eingerichtet ist, das Verfahren nach einem der vorhergehenden Ansprüche auszuführen.
